Europäisches Patentamt

European Patent Office

Office européen des brevets

(19)

(11) Numéro de publication : **0 222 861**
**B1**

(12) **FASCICULE DE BREVET EUROPÉEN**

(45) Date de publication du fascicule du brevet :
19.10.88

(21) Numéro de dépôt : 86903397.7

(22) Date de dépôt : 15.05.86

(86) Numéro de dépôt international :
PCT/FR 86/00166

(87) Numéro de publication internationale :
WO/8606693 (20.11.86 Gazette 86/25)

(51) Int. Cl.⁴ : **B 60 S   3/00**

(54) INSTALLATION POUR LE NETTOYAGE ET LE LAVAGE DE VEHICULES A DEUX ROUES.

(30) Priorité : 15.05.85 FR 8507439

(43) Date de publication de la demande :
27.05.87 Bulletin 87/22

(45) Mention de la délivrance du brevet :
19.10.88 Bulletin 88/42

(84) Etats contractants désignés :
AT BE CH DE GB IT LI LU NL SE

(56) Documents cités :
DE-B- 1 023 985
DE-C-   437 672
FR-A- 1 193 276

(73) Titulaire : SOCIETE CIVILE AXIOME
12, rue Garnier
F-92200 Neuilly sur Seine (FR)

(72) Inventeur : KERIBIN, Alain, Jean-François
12, rue Garnier
F-92200 Neuilly sur Seine (FR)
Inventeur : MITCHELL, Eric, Jean, Nicolas
14, rue Gaston Latouche
F-92210 Saint Cloud (FR)
Inventeur : GREGOIRE, François-Michel
3bis, rue de Saint Germain
F-78750 Mareil Marly (FR)

(74) Mandataire : Rataboul, Michel
Cabinet Michel Rataboul 69, rue de Richelieu
F-75002 Paris (FR)

EP 0 222 861 B1

Jouve, 18, rue St-Denis, 75001 Paris, France

## Description

Il existe depuis fort longtemps des installations plus ou moins automatiques et plus ou moins complexes pour le lavage des véhicules, en particulier des voitures automobiles.

Ces installations comprennent des portiques mobiles et portant des brosses rotatives qui frottent la carrosserie pour en détacher les poussières collées tandis que de l'eau d'aspersion entraîne les eaux usées vers une rigole d'évacuation.

De telles installations ne sont possibles que grâce au fait que le véhicule est stable et que sa carrosserie est essentiellememnt composée de grandes surfaces planes.

Il est d'ailleurs recommandé, lors du lavage d'un véhicule, de replier tous les éléments qui sont en relief par rapport à la carrosserie proprement dite : antennes de radio et de téléphone, rétroviseurs, etc.

Les installations connues ne sont pas adaptables aux véhicules à deux roues qui sont très instables lorsqu'ils sont posés sur une béquille centrale et, en outre, comme ils ne présentent pratiquement pas de carrosserie plane notamment sur les côtés, l'usage de brosses tournantes serait sans grand intérêt pratique.

Or le besoin de disposer d'installation pour le lavage de deux roues existe certainement et, s'il n'en existe pratiquement pas, c'est en raison des difficultés techniques du problème.

La présente invention concerne une solution à ce problème grâce à laquelle il est possible d'obtenir le nettoyage et le lavage d'un véhicule à deux roues même instable.

A cette fin, l'invention a pour objet une installation pour le nettoyage et le lavage de véhicules à deux roues, caractérisée en ce qu'elle comporte d'une part deux cloisons latérales dont l'une est plus près que l'autre de l'emplacement du véhicule à laver et qui portent toutes deux des rampes de distribution de liquide de lavage munies d'ajutages d'aspersion et, d'autre part, une soufflerie d'air de séchage disposée de telle sorte que son ou ses orifices de sortie soient situés au-dessus et à l'aplomb de l'emplacement du véhicule, afin de laisser dégagé en hauteur l'espace situé entre l'emplacement du véhicule et la cloison qui est la plus éloignée dudit emplacement.

Selon d'autres caractéristiques de l'invention :

l'installation présente un sol incliné vers un réceptacle d'eaux usées tel qu'une rigole reliée à une conduite d'évacuation située plus près de la cloison proche de l'emplacemnt du véhicule que de celle qui en est éloignée ;

la partie du sol où se trouve l'emplacement du véhicule a une inclinaison compatible avec l'équilibre du véhicule maintenu par ses seuls moyens propres tels que béquilles latérales ou béquilles centrales ;

les deux cloisons sont solidaires d'une base pour former un ensemble monobloc ;

l'installation prévoit un sol muni d'au moins un guide déterminant l'emplacement du véhicule ;

l'installation comporte un mécanisme de maintien d'un véhicule, comprenant une partie mobile devant être appliquée de haut en bas sur une partie essentielle du véhicule telle que le guidon, le réservoir, la selle, le cadre ou le porte-bagages habituels, notamment lorsque le liquide de lavage est projeté à haute pression ;

les ajutages d'aspersion sont situés selon une disposition non rectiligne, liée au profil des véhicules susceptibles d'être nettoyés et lavés par l'installation ;

la rampe de distribution la plus éloignée de l'emplacement du véhicule est mobile entre une position d'effacement dans laquelle elle est éloignée dudit emplacement et une position active où elle est aussi proche dudit emplacement qu'en est l'autre cloison ;

la rampe est solidaire de la cloison la plus éloignée de l'emplacement du véhicule et cette cloison est montée mobile ;

le déplacement de la rampe, respectivement de la cloison, entre ces deux positions, est obtenu automatiquement par la pression du liquide de lavage établie en fonction de la section de passage des ajutages ;

les rampes de distribution de liquide de lavage sont alimentées par une conduite sur laquelle est intercalé un venturi dont le col reçoit un conduit muni d'une vanne et relié à un réservoir de produit de lavage tel qu'un détergent ;

les ajutages d'aspersion sont diversement orientés pour compenser la dissymétrie des rampes par rapport à l'emplacement du véhicule et/ou leur localisation par rapport au véhicule susceptible d'être nettoyé et lavé par l'installation ;

l'installation comporte un support destiné à recevoir au moins un casque d'usager de véhicule à deux roues et placé à un endroit qui doit recevoir, par aspersion, du liquide de lavage.

L'invention sera mieux comprise par la description détaillée ci-après faite en référence au dessin annexé. Bien entendu, la description et les dessins ne sont donnés qu'à titre d'exemple indicatif et non limitatif.

La figure 1 est une vue schématique en perspective d'une installation conforme à l'invention.

La figure 2 est une vue schématique de la même installation vue de face par rapport à un véhicule à deux roues disposé à son emplacement.

La figure 3 est un schéma hydraulique et électrique d'une installation conforme à l'invention.

La figure 4 est une vue partielle d'un schéma pour une variante de réalisation.

En se reportant au dessin, on voit qu'une installation conforme à l'invention est réalisée en un ensemble monobloc pour constituer une sorte de cabine pouvant être entièrement préfabriquée, transportée et livrée sur place, les seuls travaux consistant en de simples raccordements d'une arrivée d'eau, d'un départ d'eaux usées et d'une alimentation électrique.

Cet ensemble comporte deux cloisons 1 et 2 ainsi qu'un sol 3 et un auvent 4 au-dessus de l'emplacement d'un véhicule à laver qui est matérialisé par une ligne longitudinale 5 sur le sol 3, ligne qui peut être dans la pratique soit un simple marquage soit un élément en relief tel qu'un cube ou une cornière, un repère 6 pouvant en outre être prévu transversalement à la ligne 5 pour indiquer l'endroit auquel le véhicule doit être arrêté.

Sous l'auvent 4 se trouve une tuyère 7 reliée à une soufflerie d'air.

Sur la cloison 1 est disposée une rampe 10 munie d'ajutages 11 et constituée par exemple par un tuyau relié à une conduite d'amenée d'eau sous pression.

Sur la cloison 2 se trouve une rampe 12 correspondant à la rampe 10 et également munie d'ajutages 13, la rampe 12 étant reliée à la rampe 10 par une conduite 14 non apparente et située par exemple sous le sol 3.

Lorsque de l'eau sous pression est introduite dans la rampe 10 et, par conséquent, dans la rampe 12 par la conduite 14, cette eau sous pression sort par les ajutages 11 de la rampe 10 et par les ajutages 13 de la rampe 12 afin d'asperger tout l'espace compris entre les cloisons 1 et 2 et, en particulier, le véhicule à deux roues placé à l'emplacement prévu à cet effet c'est-à-dire entre la cloison 1 et le guide 5.

On remarque qu'il existe un espace x entre la cloison 2 et la partie avant de l'auvent 4 alors que l'emplacement du véhicule à deux roues se trouve sensiblement à l'aplomb du milieu dudit auvent 4.

Il en résulte que l'emplacement du véhicule A est plus proche de la cloison 1 que de la cloison 2 ce qui permet de placer le véhicule A le plus près possible de la rampe 10 sans pour autant gêner l'utilisateur qui doit conduire son véhicule à la main jusqu'à l'emplacement voulu et, grâce à cette disposition, l'usager B a au-dessus de lui un espace dégagé.

Naturellement, l'élément important dont il faut tenir compte est la partie avant de l'auvent 4 dans l'exemple représenté ici, mais dans la pratique les éléments essentiels sont ceux qui permettent le fonctionnement de l'installation, à savoir la tuyère 7 qui doit se trouver exactement au-dessus du véhicule A et les rampes 10 et 12 qui doivent se trouver de part et d'autre du véhicule A.

Le sol 3 est incliné afin de permettre l'écoulement de l'eau de lavage vers une rigole 15 située sous l'emplacement du véhicule A et à laquelle est raccordée une conduite 16 pour l'évacuation des eaux usées.

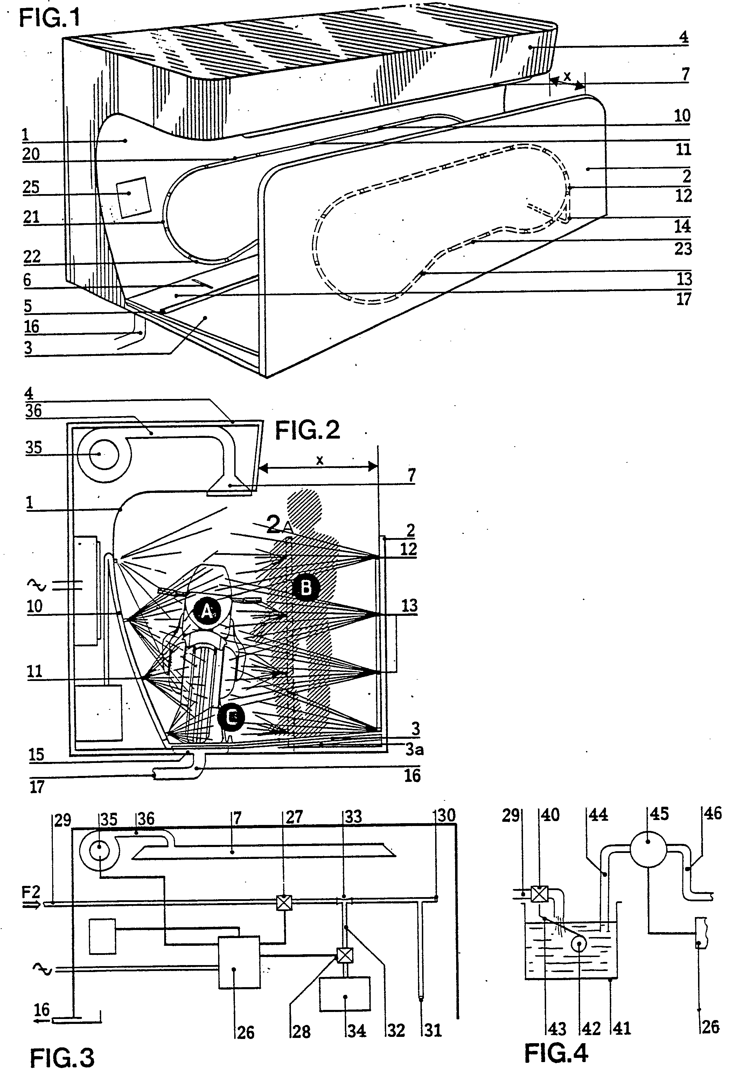

On pourrait, bien entendu, prévoir que le sol 3 est horizontal et constitué par un caillebotis, de sorte que l'eau de lavage au lieu de s'écouler vers la rigole 15 passerait directement à travers le caillebotis pour atteindre la rigole 15 par la base 3a comme on l'a représenté sur la figure 2.

Afin que l'usager B puisse utiliser l'installation en toute sécurité, il est avantageux de prévoir que le sol 3 est antidérapant soit par nature s'il est composé par exemple de tôle déployée formant en même temps caillebotis, soit par application d'un revêtement de tout type connu et qu'il n'est pas nécessaire de décrire plus en détail ici.

Il est possible de prévoir le sol 3 incliné depuis la cloison 2 vers la cloison 1 et, dans ce cas, l'emplacement du véhicule A a lui-même une certaine pente mais l'angle de cette pente n'est dicté que par la nécessité d'autoriser l'écoulement de l'eau de sorte que la pente est faible et n'affecte pas l'équilibre du véhicule A posé par exemple sur sa béquille centrale C (figure 2).

Pour une sécurité absolue on peut, comme représenté sur la figure 2, prévoir que le sol 3 est incliné depuis la cloison 2 jusqu'à l'emplacement du véhicule A celui-ci étant constitué par une plaque 17 perforée pour laisser l'eau s'écouler librement dans la rigole 15 et placée horizontalement.

Pour des raisons d'économie et de simplicité, il est bon d'utiliser de l'eau fournie sous pression à une valeur faible c'est-à-dire de l'ordre de 4 à 6 bars car cette pression donne à l'eau projetée par les ajutages 11 et 13 une énergie cinétique suffisante pour effectuer un lavage efficace du véhicule.

Sous cette pression, le véhicule ne subit aucun effort sensible affectant son équilibre.

On pourrait préférer utiliser de l'eau sous haute pression et dans ce cas-là le véhicule bien qu'aspergé symétriquement par ses deux côtés à la fois pourrait se trouver déséquilibré en raison de sa morphologie qui présenterait des parties réagissant diversement à l'eau reçue sous forte pression (des roues à rayons réagissent moins que le bloc moteur à ailettes de refroidissement) et il faudrait alors prévoir des moyens pour maintenir le véhicule A.

Ceci pourrait être réalisé en prévoyant un mécanisme comprenant une partie mobile devant être appliquée de haut en bas sur une partie essentielle du véhicule A telle qu'une potence articulée à la cloison 1 et prenant appui sur la selle lorsque le véhicule A est une moto.

Lorsque le véhicule A est un cyclomoteur, la potence pourrait également agir sur la selle mais aussi sur le cadre proprement dit ou sur tout autre partie essentielle garantissant le maintien du véhicule même s'il est sollicité au renversement d'un côté ou de l'autre.

Sur la figure 1 on remarque que les rampes 10 et 12 sont conformées selon une disposition non rectiligne et qui est fonction du profil général de tous les véhicules à deux roues susceptibles d'être nettoyés et lavés par l'installation.

Chaque rampe comprend une partie supérieure sensiblement rectiligne 20, deux segments descendants soit rectilignes soit courbes 21, deux segments sensiblement arrondis 22 et une partie centrale 23 située un peu plus haut que les parties 22.

Avec cette disposition, les ajutages 11 de la partie 20 doivent projeter de l'eau à peu près horizontalement mais de préférence d'une manière légèrement inclinée vers le bas afin d'asperger tout le dessus du véhicule A et les parties supérieures du bloc moteur, des sacoches, etc.

Les ajutages des parties 21 et des parties 22 sont plus particulièrement destinés à l'aspersion des roues et les ajutages de la partie 23 à l'aspersion du bloc moteur horizontalement.

Les ajutages des rampes 10 et 12 peuvent être diversement orientés, quelle que soit la disposition effective de ces rampes 10 et 12 afin que certains d'entre eux dirigent un jet plutôt de haut en bas pour les parties dirigées vers le haut et d'autres dirigées de bas en haut pour les parties dirigées vers le bas, telles que le dessous de garde-boue, le dessous du bloc moteur, la partie supérieure de jantes, etc.

De la même manière, certains ajutages doivent être dirigés plutôt de gauche à droite et d'autres plutôt de droite à gauche afin que globalement toutes les parties accessibles du véhicule A soient atteintes.

Sur la figure 2, on remarque que les ajutages 13 de la rampe 12 ne sont pas dirigés de la même manière que le sont les ajutages de la rampe 10 pour compenser la dissymétrie de ces rampes par rapport à l'emplacement du véhicule A.

Pour compenser cette dissymétrie, on pourrait également agir autrement en rendant mobile soit la rampe 12 par rapport à la cloison 2 soit à la fois la rampe 12 et la cloison 2.

Sur la figure 2 on a schématisé cette possibilité en montrant en pointillé en 2a la position de la cloison 2 qui, au moment de l'utilisation, est déplacée automatiquement selon la flèche 1 pour s'approcher de l'emplacement du véhicule A et se trouver sensiblement à égale distance de cet emplacement par rapport à la cloison 1.

Dans ce cas, les ajutages 11 et 13 peuvent être exactement symétriques.

Le déplacement de la rampe 12 et/ou de la cloison 2 suppose la présence de guides (non représentés) et peut être obtenu automatiquement en tenant compte de la corrélation qui existe entre la pression et le débit de l'eau de lavage d'une part et le diamètre des ajutages 13 d'autre part. En effet, en prévoyant des ajutages 13 plutôt sous-dimensionnés, l'eau sous pression a tendance à pousser la rampe 12 vers l'avant et si l'on prévoit une partie flexible entre la conduite 14 et la rampe 12 (ou la cloison 2 elle-même) la rampe 12 sera poussée le long de ces guides jusqu'à des butées convenablement disposées pour l'arrêter à l'endroit voulu, l'eau continuant d'être projetée par les ajutages 13.

Afin que le lavage soit efficace, on prévoit l'utilisation d'un détergent liquide qui est aspergé sur le véhicule A par les mêmes ajutages c'est-à-dire arrivant par les mêmes rampes 10 et 12 puis en le laissant agir seul pendant quelques instants, l'eau étant ensuite utilisée pour un rinçage final.

Le fonctionnement automatique de l'installation qui vient d'être décrite est le suivant :

L'usager B conduit son véhicule à la main sur le sol 3 entre la cloison 1 et le guide 5 jusqu'à ce que la roue avant du véhicule A atteigne le repère 6.

Il met alors le véhicule A sur la béquille centrale C puis il introduit un jeton ou une pièce de monnaie dans un monnayeur 25 relié à un tableau de commande 26 comprenant à la manière connue des contacteurs, des temporisateurs et autres connexions électriques bien connues de l'homme de métier et qui n'ont pas à être décrites ici.

L'introduction de ce jeton ou de cette pièce de monnaie a pour conséquence de déclencher un cycle qui prévoit tout d'abord l'ouverture d'une vanne 27 et la fermeture d'une vanne 28 afin que de l'eau arrivant sous pression selon la flèche F2 par une conduite 29 puisse être amenée à l'entrée 30 de la rampe 10 et à l'entrée 31 de la conduite 14 aboutissant, comme on l'a dit plus haut, à la rampe 12.

Un temporisateur du tableau de commande 26 provoque l'ouverture de la vanne 28 située sur une conduite 32 aboutissant au col d'un venturi 33 intercalé sur la conduite 29, de telle sorte que l'eau circulant dans cette conduite provoque l'aspiration d'un détergent situé dans un réservoir 34 et, après quelques secondes, le temporisateur du tableau de commande 26 provoque la fermeture simultanée des vannes 27 et 28 pour laisser agir le détergent.

Après un temps prédéterminé, la vanne 27 est à nouveau ouverte tandis que la vanne 28 est maintenue fermée afin que de l'eau sous pression, sans détergent, rince le véhicule A jusqu'à élimination totale du détergent et des poussières dont il a provoqué le départ.

Après un temps prédéterminé, la vanne 27 est à son tour fermée et un contacteur établit le courant dans le moteur d'une soufflerie 35 reliée par une conduite 36 à la tuyère 7 située au-dessus de l'emplacement du véhicule A, ce qui a pour conséquence d'envoyer de l'air pulsé exactement sur le dessus du véhicule A et de sécher essentiellement les parties qui doivent l'être, à savoir guidon, pare-brise et selle.

Après un certain temps prédéterminé, l'alimentation du moteur de la soufflerie 35 est interrompu et l'ensemble de l'installation se trouve arrêté.

Un signal peut prévenir l'usager que l'opération de lavage et de nettoyage est terminée afin que celui-ci puisse reprendre son véhicule.

Il peut être prévu, pour le confort de l'usager, un distributeur de papier absorbant lui permettant de parfaire le séchage de la selle ou du pare-brise.

On peut également prévoir un emplacement destiné à recevoir un ou plusieurs casques et situé entre les rampes 10 et 12 afin que ces casques puissent être lavés et rincés en même temps que le véhicule A.

En se reportant maintenant à la figure 4, on voit une variante qui est utile lorsque l'eau qui arrive par la conduite 29 n'a pas la pression suffisante pour garantir un lavage efficace ou présente des variations de pression telles que ce lavage pourrait être aléatoire.

Dans ce cas, une vanne 40 est prévue à l'arrivée de la conduite 29, laquelle débouche dans un réservoir 41, la vanne 40 étant munie, ainsi que cela est bien connu en soi, d'un obturateur soumis à un flotteur 42 fixé à l'extrémité d'une tige pivotante 43.

Dans le réservoir 41, plonge un tuyau 44 aboutissant à une pompe 45 reliée par ailleurs à un conduit 46 équivalent à la conduite 29 c'est-à-dire aboutissant à la vanne 27, au venturi 33, etc.

La capacité du réservoir 41 est calculée de telle manière qu'il contienne suffisamment d'eau pour une opération de lavage complète et, lorsque le monnayeur 25 déclenche le début du cycle, l'ouverture de la vanne 27 s'accompagne de la mise en route du moteur de la pompe 45 afin de provoquer l'arrivée d'eau sous pression dans la conduite 46, les opérations suivantes ayant précédemment été décrites.

Comme on le sait, lorsque le niveau dans le réservoir 41 baisse, le flotteur 42 s'abaisse également et fait pivoter la tige 43 qui ouvre la vanne 40 et provoque l'arrivée d'eau par la conduite 29 dans le réservoir 41, la vanne 40 étant fermée lorsque, le niveau ayant remonté, le flotteur 42 a atteint la position correspondant à cette fermeture.

## Revendications

1. Installation pour le nettoyage et le lavage de véhicules à deux roues (A), caractérisée en ce qu'elle comporte, d'une part, deux cloisons latérales (1 et 2) dont l'une (1) est plus près que l'autre (2) de l'emplacement du véhicule (A) à laver et qui portent toutes deux des rampes de distribution de liquide de lavage (10 et 12) munies d'ajutages d'aspersion (11 et 13) et, d'autre part, une soufflerie d'air de séchage disposée de telle sorte que son ou ses orifices de sortie (7) soit(ent) situé(s) au-dessus et à l'aplomb de l'emplacement du véhicule (A), afin de laisser dégagé en hauteur l'espace (x) situé entre l'emplacement du véhicule (A) et la cloison (2) qui est la plus éloignée dudit emplacement pour permettre à l'utilisateur du véhicule d'y conduire ce dernier à la main sans gêne et de l'en retirer.

2. Installation selon la revendication 1, caractérisée en ce qu'elle présente un sol (3) incliné vers un réceptacle d'eau usée tel qu'une rigole (15) reliée à une conduite d'évacuation (16) située plus près de la cloison (1) proche de l'emplacement du véhicule (A) que celle (2) qui en est éloignée.

3. Installation selon la revendication 2, caractérisée en ce que la partie du sol où se trouve l'emplacement du véhicule (A) a une inclinaison compatible avec l'équilibre du véhicule (A) maintenu par ses seuls moyens propres tels que béquille latérale ou béquille centrale (C).

4. Installation selon la revendication 1, caractérisée en ce que les deux cloisons (1 et 2) sont solidaires d'une base (3a) pour former un ensemble monobloc.

5. Installation selon la revendication 1, caractérisée en ce qu'elle présente un sol (3) muni d'au moins un guide (5) déterminant l'emplacement du véhicule (A).

6. Installation selon la revendication 2, caractérisée en ce qu'elle comporte un mécanisme de maintien d'un véhicule comprenant une partie mobile devant être appliquée de haut en bas sur une partie essentielle du véhicule telle que le guidon, le réservoir, la selle ou le porte-bagages habituels, notamment lorsque le liquide de lavage est projeté à haute pression.

7. Installation selon la revendication 1, caractérisée en ce que les ajutages d'aspersion (11 et 13) sont situés selon une disposition non rectiligne, liée au profil des véhicules (A) susceptibles d'être nettoyés et lavés par l'installation.

8. Installation selon la revendication 1, caractérisée en ce que la rampe de distribution (12) la plus éloignée de l'emplacement du véhicule (A) est mobile entre une position d'effacement dans laquelle elle est éloignée dudit emplacement et une position active où elle est aussi proche dudit emplacement qu'en est l'autre cloison (1).

9. Installation selon la revendication 8, caractérisée en ce que la rampe (12) est solidaire de la cloison (2) la plus éloignée de l'emplacement du véhicule (A) et cette cloison est montée mobile.

10. Installation selon l'une quelconque des revendications 8 et 9, caractérisée en ce que le déplacement de la rampe (12), respectivement de la cloison (2), entre ses deux positions est obtenu automatiquement par la pression du liquide de lavage établie en fonction de la section de passage des ajutages (13).

11. Installation selon la revendication 1, caractérisée en ce que les rampes de distribution du liquide de lavage (10 et 12) sont alimentées par une conduite (29) sur laquelle est intercalé un venturi (33) dont le col reçoit un conduit (32) muni d'une vanne (28) et reliée à un réservoir de produit de lavage (34) tel qu'un détergent.

12. Installation selon la revendication 1, caractérisée en ce que les ajutages d'aspersion (11 et 13) sont diversement orientés pour compenser la dissymétrie des rampes (10 et 12) par rapport à l'emplacement du véhicule (A) et/ou leur localisation par rapport aux véhicules (A) susceptibles d'être nettoyés et lavés par l'installation.

13. Installation selon la revendication 1, caractérisée en ce qu'elle comporte un support destiné à recevoir au moins un casque d'usager de véhicules à deux roues et placé à un endroit qui doit recevoir, par aspersion, du liquide de lavage.

## Claims

1. Installation for the cleaning and washing of two-wheeled vehicles (A), characterised in that it comprises, on the one hand two sidewalls (1 and 2) of which the one (1) is closer than the other (2) to the location of the vehicle (A) to be washed and which both carry washing fluid distribution lines (10 and 12) provided with spraying nozzles (11 and 13) and, on the other hand a drying air blower system arranged in such a way that its outlet orifice(s) (7) is/are situated above and in line with the position of the vehicle (A), so that the space (x) situated between the position of the vehicle (A) and the wall (2) which is farthest from the said position is made available to enable the user to push the vehicle in by hand, without difficulty, and to withdraw it.

2. Installation according to claim 1, characterised in that it has a floor (3) sloping towards a receptacle for waste water, such as a gutter (15) connected to a discharge pipe (16) situated closer to the wall (1) close to the location of the vehicle (A), than to that (2) which is remote therefrom.

3. Installation according to claim 2, characterised in that the part of the floor on which the vehicle (A) is to be located has a slope compatible with the balance of the vehicle (A) sustained only by its own means such as a side stand or a central stand (C).

4. Installation according to claim 1, characterised in that the two walls (1 and 2) are integral with a base (3a) to form a one-piece assembly.

5. Installation according to claim 1, characterised in that it has a floor (3) provided with at least one guide (5) determining the location of the vehicle (A).

6. Plant according to claim 2, characterised in that it comprises a mechanism for supporting a vehicle, comprising a movable part intended to be applied downwards on an essential part of the vehicle such as the usual handlebar, tank, saddle or luggage carrier, in particular if the washing fluid is sprayed under high pressure.

7. Installation according to claim 1, characterised in that the spraying nozzles (11 and 13) are arranged in a non-rectilinear pattern matching the outline of the vehicles (A) which can be cleaned and washed by means of the installation.

8. Installation according to claim 1, characterised in that the distribution line (12) which is farthest from the location of the vehicle (A) is movable between a withdrawn position in which it is distant from the said location, and an active position in which it is as close to the said location as the other wall (1) is to the same.

9. Installation according to claim 8, characterised in that the line (12) is unitary with the wall (2) which is farthest from the location of the vehicle (A) and that this wall is movably mounted.

10. Installation according to either of claims 8 and 9, characterised in that the displacement of the line (12) and hence of the wall (2), between its two positions is obtained automatically by means of the pressure of the washing fluid calculated as a function of the passage cross-section of the nozzles (13).

11. Installation according to claim 1, characterised in that the washing fluid distribution lines (10 and 12) are supplied via a pipe (29) in which is interposed a venturi (33) the constriction of which receives a pipe (32) provided with a valve (28) and connected to a container (34) for a washing product, such as a detergent.

12. Installation according to claim 1, characterised in that the spraying nozzles (11 and 13) are aimed in different directions to compensate for the asymmetry of the lines (10 and 12) with respect to the location of the vehicle (A) and/or to their location relative to the vehicles (A) which can be cleaned and washed by means of the installation.

13. Installation according to claim 1, characterised in that it comprises a carrier intended to receive at least one helmet of a user of two-wheeled vehicles, and positioned at a point which is to receive washing fluid by spraying.

**Patentansprüche**

1. Vorrichtung zum Reinigen und Waschen von Zweiradfahrzeugen (A), dadurch gekennzeichnet, daß sie umfaßt einerseits zwei seitliche Wände (1 und 2), von denen eine (1) dem Standort des zu waschenden Fahrzeuges (A) näher als die andere (2) ist und die beide Rampen zur Verteilung von Waschflüssigkeit (10 und 12) tragen, die mit Sprühansätzen (11 und 13) versehen sind, und andererseits ein Trocknungsluftgebläse, das derart angeordnet ist, daß sein oder seine Austrittsöffnungen (7) oberhalb und in der senkrechten Richtung des Standortes des Fahrzeuges (A) liegt (liegen), um in der Höhe den Raum (x) freizulassen, der zwischen dem Standort des Fahrzeuges (A) und der Wand (2) liegt, die die am weitesten vom Standort entfernte ist, um es dem Benutzer des Fahrzeuges zu gestatten, letzteres dorthin von Hand ohne Unbequemlichkeit zu führen und es von dort zurückzuziehen.

2. Vorrichtung nach Anspruch 1, dadurch gekennzeichnet, daß sie einen zu einem wie ein Ablauf (15) verwendeten Wasseraufnehmer geneigten Boden (3) aufweist, der mit einer Abführleitung (16) verbunden ist, die näher zur Wand (1) nahe dem Standort des Fahrzeuges (A) als zu derjenigen (2) liegt, die von diesem entfernt ist.

3. Vorrichtung nach Anspruch 2, dadurch gekennzeichnet, daß der Teil des Bodens, wo sich der Standort des Fahrzeuges (A) befindet, eine mit dem Gleichgewicht des Fahrzeuges (A) kompatible Neigung aufweist, das durch seine alleinigen, eigenen Mittel wie seitlichen Ständer oder zentralen Ständer (C) gehalten ist.

4. Vorrichtung nach Anspruch 1, dadurch gekennzeichnet, daß die beiden Wände (1 und 2) fest mit einer Basis (3a) verbunden sind, um einen Aufbau aus einem Stück zu bilden.

5. Vorrichtung nach Anspruch 1, dadurch gekennzeichnet, daß sie einen Boden (3) aufweist, der mit wenigstens einer den Standort des Fahrzeuges (A) bestimmenden Führung (5) versehen ist.

6. Vorrichtung nach Anspruch 2, dadurch gekennzeichnet, daß sie einen Mechanismus zum Halten eines Fahrzeuges umfaßt, aufweisend einen beweglichen Teil, der von oben nach unten auf einem wesentlichen Teil des Fahrzeuges wie der Lenkstange, dem Tank, dem Sattel oder dem Gepäckträger, gewöhnlicher Art, befestigt werden muß, insbesondere wenn die Waschflüssigkeit mit hohem Druck ausgespritzt wird.

7. Vorrichtung nach Anspruch 1, dadurch gekennzeichnet, daß die Spritzansätze (11 und 13) gemäß einer nicht geradlinigen Anordnung liegen, die mit dem Profil der Fahrzeuge (A) verbunden ist, die geeignet sind, durch die Vorrichtung gereinigt und gewaschen zu werden.

8. Vorrichtung nach Anspruch 1, dadurch gekennzeichnet, daß die Verteilungsrampe (12), die vom Standort des Fahrzeuges (A) am entferntesten ist, zwischen einer Zurückziehposition, in der sie vom Standort entfernt ist, und einer aktiven Position beweglich ist, wo sie dem Standort eben so nahe wie die andere Wand (1) ist.

9. Vorrichtung nach Anspruch 8, dadurch gekennzeichnet, daß die Rampe (12) mit der vom Standort des Fahrzeuges (A) entferntesten Wand (2) fest verbunden ist und diese Wand beweglich angebracht ist.

10. Vorrichtung nach einem beliebigen der Ansprüche 8 und 9, dadurch gekennzeichnet, daß die Verstellung der Rampe (12) bzw. der Wand (2) zwischen ihren beiden Positionen automatisch durch den Druck der Waschflüssigkeit erhalten wird, der abhängig vom Durchtrittsquerschnitt der Ansätze (13) vorgesehen wird.

11. Vorrichtung nach Anspruch 1, dadurch gekennzeichnet, daß die Rampen zur Verteilung der Waschflüssigkeit (10) und (12) mittels einer Leitung (29) gespeist werden, auf der ein Venturi (33) eingeschoben ist, dessen Hals eine Leitung (32) aufnimmt, die mit einem Ventil (28) versehen ist und mit einem Behälter (34) für Waschmittel wie einem Detergens verbunden ist.

12. Vorrichtung nach Anspruch 1, dadurch gekennzeichnet, daß die Spritzansätze (11 und 13) verschiedenartig orientiert sind, um die Unsymmetrie der Rampen (10 und 12) in bezug auf den Standort des Fahrzeuges (A) und/oder ihre Lokalisierung in bezug auf die Fahrzeuge (A) auszugleichen, die geeignet sind, durch die Vorrichtung gereinigt und gewaschen zu werden.

13. Vorrichtung nach Anspruch 1, dadurch gekennzeichnet, daß sie einen Träger umfaßt, der zur Aufnahme wenigstens eines Benutzerhelms von Zweiradfahrzeugen bestimmt ist und an einer Stelle angeordnet ist, die durch Spritzen Waschflüssigkeit aufnehmen soll.

0 222 861

FIG.1

FIG.2

FIG.3

FIG.4

1